# EUROPÄISCHE PATENTANMELDUNG

(11) **EP 4 818 369 A1**
(43) Veröffentlichungstag der Anmeldung: **07.10.2026**
(21) Anmeldenummer: 25168474.2
(22) Anmeldetag: 04.04.2025
(51) Int. Cl.: C25B 1/042, C25B 15/08, F16K 3/02, H01M 8/04082, F16K 31/46, F16K 49/00

(54) **VERSCHLUSSVORRICHTUNG, ELEKTROLYSESYSTEM UND VERFAHREN**

(71) Anmelder: Sunfire SE, 01237 Dresden (DE)
(72) Erfinder: Paul, Raphael, 01277 Dresden (DE); Städel, Christian, 01189 Dresden (DE); Klahn, Christian, 03238 Finsterwalde (DE)
(74) Vertreter: Epping - Hermann - Fischer

(57) **Zusammenfassung**

Verschlussvorrichtung (100) für ein Elektrolysesystem (200), wobei die Verschlussvorrichtung (100) aufweist:
- einen Drosselkörper (110), der eine Drosselfläche (111) aufweist, die dazu ausgebildet ist, einen Fluiddurchlass (211) zu begrenzen,
- eine entlang einer ersten Richtung (301) länglich ausgedehnte Antriebsstange (120),
- ein entlang der ersten Richtung (301) länglich ausgedehntes Gehäuse (140), das einen Innenraum (141) umgibt, wobei die Antriebsstange (120) zumindest teilweise in dem Innenraum (141) angeordnet ist,
- einen Antrieb (150), wobei die Antriebsstange (120) mit dem Drosselkörper (110) und dem Antrieb (150) gekoppelt ist, um eine Antriebsenergie des Antriebs (150) auf den Drosselkörper (110) zu übertragen, sodass der Drosselkörper (110) entlang der ersten Richtung (301) relativ zu dem Gehäuse (140) linear verschiebbar ist.

## Beschreibung

Die Offenbarung betrifft eine Verschlussvorrichtung für ein Elektrolysesystem. Die Offenbarung betrifft weiterhin ein Elektrolysesystem. Die Offenbarung betrifft weiterhin ein Verfahren zum Betreiben eines Elektrolysesystems, insbesondere zum Betreiben eines hier beschriebenen Elektrolysesystems.

Ein Elektrolysesystem, auch als Elektrolyseur bezeichnet, wie beispielsweise ein Hochtemperatur-Wasserdampf-Elektrolyseur (SOEC), wird beispielsweise mit Wasserdampf betrieben, der mit Hilfe von Elektroenergie in Wasserdampf und Sauerstoff zerlegt wird.

Es ist wünschenswert, eine Verschlussvorrichtung für ein Elektrolysesystem anzugeben, die einen verlässlichen Betrieb ermöglicht. Es ist zudem wünschenswert, ein Elektrolysesystem anzugeben, das einen verlässlichen Betrieb ermöglicht. Es ist zudem wünschenswert, ein Verfahren zum Betreiben eines Elektrolysesystems anzugeben, das verlässlich durchführbar ist.

Ausführungsformen der Offenbarung betreffen eine Verschlussvorrichtung für ein Elektrolysesystem. Weitere Ausführungsformen der Offenbarung betreffen ein Elektrolysesystem, insbesondere ein Elektrolysesystem mit einer hier beschriebenen Verschlussvorrichtung. Weitere Ausführungsformen der Offenbarung betreffen ein Verfahren zum Betreiben eines Elektrolysesystems, insbesondere ein Verfahren zum Betreiben eines hier beschriebenen Elektrolysesystems.

Die Verschlussvorrichtung weist einen Drosselkörper auf. Der Drosselkörper weist eine Drosselfläche auf. Die Drosselfläche ist dazu ausgebildet, einen Fluiddurchlass zu begrenzen. Die Verschlussvorrichtung weist eine entlang einer ersten Richtung länglich ausgedehnte Antriebsstange auf. Die Verschlussvorrichtung weist ein entlang der ersten Richtung länglich ausgedehntes Gehäuse auf. Das Gehäuse umgibt einen Innenraum. Die Antriebsstange ist zumindest teilweise in dem Innenraum angeordnet. Die Verschlussvorrichtung weist einen Antrieb auf. Die Antriebsstange ist mit dem Drosselkörper und dem Antrieb gekoppelt. Eine Antriebsenergie des Antriebs ist mittels der Antriebsstange auf den Drosselkörper übertragbar, um den Drosselkörper entlang der ersten Richtung relativ zu dem Gehäuse linear zu verschieben.

Mittels der Verschlussvorrichtung ist es insbesondere möglich, im Betrieb einen Volumenstrom des Dampfs durch das Elektrolysesystem einzustellen. Beispielsweise ist das Elektrolysesystem ein Hochtemperatur-Wasserdampf-Elektrolysesystem (SOEC). Das Elektrolysesystem weist beispielsweise eine Mehrzahl von Stapeln mit jeweiligen Elektrolysezellen auf. Die Verschlussvorrichtung ist ausgebildet, den Volumenstrom durch einen dieser Stapel zu begrenzen und freizugeben. Mittels der linearen Verschiebung des Drosselkörpers ist der maximal mögliche Volumenstrom verringerbar und erhöhbar.

Die Verschlussvorrichtung ermöglicht dabei auch bei den im Betrieb auftretenden hohen Temperaturen von 200 °C oder mehr, beispielsweise bis zu 850 °C oder mehr, ein verlässliches Verschieben des Drosselkörpers, um den Fluiddurchlass zu begrenzen.

Die lineare Anordnung des Drosselkörpers auf einer Seite der Antriebsstange und des Antriebs auf einer gegenüberliegenden Seite der Antriebsstange ermöglicht beispielsweise, dass der Antrieb in einem Bereich anordenbar ist, an dem geringere Temperaturen im Betrieb auftreten als in der Region, in der der Drosselkörper anordenbar ist. Beispielsweise ist der Drosselkörper in einem Bereich von 850 °C oder mehr angeordnet und der Antrieb in einem Bereich, bei dem Temperaturen von etwa 100 °C bis 120 °C vorherrschen.

Gemäß Ausführungsformen weist die Drosselfläche eine schräge Flanke auf. Insbesondere ist die schräge Flanke an einer dem Antrieb abgewandten Seite des Drosselkörpers angeordnet. Die schräge Flanke kann auch als Phase bezeichnet werden. Die schräge Flanke ermöglicht insbesondere eine gute Regelgenauigkeit. Im Betrieb ist somit der Volumenstrom mittels der Verschlussvorrichtung präzise einstellbar.

Gemäß Ausführungsformen ist der Drosselkörper relativ zu dem Gehäuse entlang einer zweiten Richtung verschiebbar. Die zweite Richtung ist quer zu der ersten Richtung ausgerichtet. Die Verschiebung entlang der zweiten Richtung ermöglicht insbesondere eine präzise Anordnung des Drosselkörpers an einer gewünschten Stelle während der Montage der Verschlussvorrichtung in dem Elektrolysesystem. Beispielsweise ist mittels der Verschiebung entlang der zweiten Richtung ein Toleranzausgleich realisierbar. Gewünschte Abstände zu dem Fluiddurchlass entlang der zweiten Richtung sind mittels der Verschiebbarkeit des Drosselkörpers entlang der zweiten Richtung einstellbar.

Gemäß Ausführungsformen weist die Antriebsstange einen exzentrischen ersten Endabschnitt **auf.** Der Drosselkörper ist an dem ersten Endabschnitt mit der Antriebsstange gekoppelt. Die exzentrische Anordnung des ersten Endabschnitts in Bezug auf die übrige Antriebsstange ermöglicht, dass mittels einer Drehung des ersten Endabschnitts um die erste Richtung der Drosselkörper entlang der ersten Richtung verschiebbar **ist.** Alternativ oder zusätzlich ist der Drosselkörper mittels einer Drehung des ersten Endabschnitts um die erste Richtung entlang der zweiten Richtung verschiebbar. Dies ermöglicht insbesondere die präzise Anordnung des Drosselkörpers in vorgegebenen Abständen zu dem Fluiddurchlass.

Beispielsweise weist die Antriebsstange zwei Bauteile auf. Eines dieser Bauteile realisiert beispielsweise den ersten Endabschnitt. Das zweite dieser Bauteile ist beispielsweise mit dem Antrieb verbunden. Beispielsweise ist das erste Bauteil relativ zu dem zweiten Bauteil verdrehbar, um den Drosselkörper entlang der ersten Richtung und/oder entlang der zweiten Richtung relativ zu dem zweiten Bauteil zu verschieben.

Beispielsweise ist zwischen dem ersten Bauteil und dem zweiten Bauteil ein Gewinde vorgesehen, sodass bei dem Verdrehen der beiden Bauteile relativ zueinander die Verschiebung entlang der ersten Richtung möglich ist. Beispielsweise weist das erste Bauteil ein Innengewinde auf. Beispielsweise weist das zweite Bauteil ein korrespondierendes Außengewinde auf oder ist als Gewindestange ausgebildet. Das erste Bauteil ist auf das zweite Bauteil aufschraubbar.

Die exzentrische Anordnung zumindest eines Abschnitts des ersten Bauteils und des zweiten Bauteils relativ zueinander ermöglicht bei dem Verdrehen die Verschiebung entlang der zweiten Richtung.

Gemäß Ausführungsformen weist das Gehäuse einen dem Drosselkörper zugewandten Gehäuseabschnitt auf. In diesem dem Drosselkörper zugewandten Gehäuseabschnitt weist das Gehäuse beispielsweise ein Keramiklager auf, an dem die Antriebsstange abgestützt ist. Das Keramiklager ermöglicht auch bei den im Betrieb auftretenden Temperaturen und insbesondere bei dem Temperaturgradient entlang der ersten Richtung ein verlässliches Lagern der Antriebsstange, um die Verschiebung entlang der ersten Richtung zu ermöglichen.

Gemäß Ausführungsformen weist die Antriebsstange an einem dem Antrieb abgewandten Lagerabschnitt eine Keramikbeschichtung auf. Beispielsweise ist die Keramikbeschichtung an dem ersten Bauteil Die Keramikbeschichtung ermöglicht beispielsweise auch bei den im Betrieb auftretenden Temperaturen und insbesondere dem entlang der ersten Richtung auftretenden Temperaturgradienten ein verlässliches Lagern der Antriebsstange in dem Gehäuse, um die Verschiebung entlang der ersten Richtung zu ermöglichen. Beispielsweise weisen sowohl das Gehäuse das Keramiklager auf als auch die Antriebsstange die Keramikbeschichtung. Insbesondere ist die Keramikbeschichtung in Kontakt mit dem Keramiklager. Die Keramikbeschichtung gleitet im Betrieb entlang des Keramiklagers. Es ist auch möglich, dass entweder nur das Keramiklager oder nur die Keramikbeschichtung vorgesehen ist.

Gemäß Ausführungsformen weist die Antriebsstange einen Wärmeschild auf. Der Wärmeschild ist ausgebildet, um eine Ausbreitung von Wärme entlang der ersten Richtung in dem Innenraum zu verringern. Insbesondere ermöglicht der Wärmeschild, dass die hohen Temperaturen, die an dem Drosselkörper im Betrieb herrschen, entlang der ersten Richtung in Richtung hin zu dem Antrieb reduzierbar sind. Die Wärme, die an dem Drosselkörper vorherrscht, wird an einer Ausbreitung in dem Gehäuse hin zu dem Antrieb mittels des Wärmeschilds gehindert.

Gemäß Ausführungsformen weist der Antrieb einen pneumatischen oder hydraulischen Antrieb auf. Der Antrieb ist an einem dem Drosselkörper abgewandten zweiten Endabschnitt der Antriebsstange mit der Antriebsstange gekoppelt. Der pneumatische oder hydraulische Antrieb weist beispielsweise einen Membranbalg auf, der ein gegenüber dem Innenraum des Gehäuses hermetisch gedichtetes, veränderliches Volumen bereitstellt. Bei einem Zusammenpressen des Membranbalgs und einer daraus resultierenden Reduzierung des Volumens innerhalb des Membranbalgs und mittels eines Ausdehnens des Membranbalgs und der daraus resultierenden Vergrößerung des Volumens innerhalb des Membranbalgs wird die Antriebsstange entlang der ersten Richtung verschoben. Das Zusammendrücken und Auseinanderziehen des Membranbalgs werden beispielsweise pneumatisch und/oder hydraulisch realisiert. Der Membranbalg ermöglicht somit die Funktion eines einfach wirkenden Pneumatikzylinders oder Hydraulikzylinders.

Gemäß Ausführungsformen weist der Antrieb eine Feder auf, die die Antriebsstange entlang der ersten Richtung vorspannt. Insbesondere spannt die Feder die Antriebsstange so vor, dass die Feder mittels der Antriebsstange eine Kraft auf den Drosselkörper in Richtung hin zu dem Gehäuse auswirkt. Mittels des Membranbalgs ist es möglich, eine der Federkraft entgegenwirkende Kraft auf die Antriebsstange auszuwirken, die den Drosselkörper entlang der ersten Richtung weg von dem Gehäuse bewegt.

Das Elektrolysesystem weist beispielsweise eine Verschlussvorrichtung gemäß einer der hier beschriebenen Ausführungsformen auf. Das Elektrolysesystem weist einen Träger zum Tragen einer Elektrolysezellenanordnung auf. Die Verschlussvorrichtung ist mit dem Träger gekoppelt. Der Träger umgibt eine Sammelleitung. Der Träger weist einen Fluiddurchlass auf. Der Fluiddurchlass ist fluidisch mit der Sammelleitung gekoppelt. Fluid ist beispielsweise durch den Fluiddurchlass hindurch in die Sammelleitung einbringbar.

Der Drosselkörper ist innerhalb der Sammelleitung angeordnet. Der Drosselkörper ist relativ zu dem Träger verschiebbar. Mittels der Verschiebung des Drosselkörpers relativ zu dem Träger ist der Fluiddurchlass wahlweise freigebbar und der Drosselkörper ist teilweise vor dem Fluiddurchlass anordenbar, um den Fluiddurchlass zu begrenzen. Somit ist es mittels der Verschlussvorrichtung möglich, einen Fluidfluss durch den Fluiddurchlass in die Sammelleitung zu kontrollieren. Somit ist beispielsweise ein Volumenstrom durch den Fluiddurchlass in die Sammelleitung drosselbar. Die Drosselwirkung der Verschlussvorrichtung ist mittels der Verschiebung des Drosselkörpers relativ zu dem Träger einstellbar.

Gemäß Ausführungsformen sind das Gehäuse und der Träger fluiddicht miteinander gekoppelt. Das Gehäuse ragt von außerhalb des Trägers in den Innenraum hinein. Insbesondere ist der Antrieb außerhalb des Trägers angeordnet. Somit ist der Antrieb in einer Region anordenbar, in der im Betrieb deutlich geringere Temperaturen vorherrschen als im Inneren der Sammelleitung.

Gemäß Ausführungsformen weist das Elektrolysesystem eine Elektrolysezellenanordnung auf. Die Elektrolysezellenanordnung ist auf dem Träger angeordnet und fluidisch mit dem Fluiddurchlass gekoppelt. Ein Prozessfluid ist aus der Elektrolysezellenanordnung durch den Fluiddurchlass hindurch in die Sammelleitung einleitbar. Mittels der Verschlussvorrichtung ist es insbesondere möglich, den Volumenstrom des Prozessfluids durch die Elektrolysezellenanordnung hindurch wie gewünscht einzustellen.

Gemäß Ausführungsformen weist das Elektrolysesystem eine Mehrzahl von Verschlussvorrichtungen auf. Die Verschlussvorrichtungen sind jeweils mit dem Träger gekoppelt. Die Drosselkörper der Verschlussvorrichtungen sind jeweils innerhalb der Sammelleitung angeordnet. Insbesondere weist das Elektrolysesystem eine Mehrzahl von Elektrolysezellenanordnungen auf. Insbesondere ist je Elektrolysezellenanordnung eine Verschlussvorrichtung vorgesehen. Die Elektrolysezellenanordnungen sind jeweils auf dem Träger angeordnet. Jede der Elektrolysezellenanordnungen ist fluidisch mit einem zugehörigen Fluiddurchlass gekoppelt.

Die Verschlussvorrichtungen ermöglichen je Elektrolysezellenanordnung den Volumenstrom durch die jeweilige zugeordnete Elektrolysezellenanordnung einzustellen. Somit ist es insbesondere möglich, den Volumenstrom der Elektrolysezellenanordnungen unterschiedlich zueinander einzustellen. Beispielsweise ist es möglich, mittels der Verschlussvorrichtungen die jeweiligen Volumenströme so einzustellen, dass die Elektrolysezelleanordnungen des Elektrolysesystems korrespondierend zueinander betreibbar sind. Insbesondere wird der Volumenstrom jeweils erhöht oder eingeschränkt, sodass die Elektrolysezellenanordnungen jeweils einen möglichst gleichen Umsatz haben, also eine möglichst gleiche Gaszusammensetzung in die Sammelleitung auslassen. Der Umsatz der Elektrolysezellenanordnung ist beispielsweise ein Wert, wieviel des Wasserdampfs in Wasserstoff und Sauerstoff aufgeteilt wird.

Beispielsweise ist es möglich, mittels Einstellung des Volumenstroms des Prozessfluids individuell für jede der Elektrolysezellenanordnungen eine gleiche Versorgung mit elektrischer Energie, eine gleiche Versorgung mit Wärme und/oder eine gleiche Versorgung mit dem Prozessfluid zu ermöglichen, auch wenn die jeweiligen Elektrolysezellenanordnungen unterschiedlich effizient arbeiten.

Das Verfahren zum Betreiben eines Elektrolysezellensystems mit einer Elektrolysezellenanordnung weist ein Vorgeben eines Soll-Umsatzes der Elektrolyse in der Elektrolysezellenanordnung auf. Ein Drosselquerschnitt wird in Abhängigkeit von dem Soll-Umsatz verändert. Mittels der Veränderung des Drosselquerschnitts wird ein Volumenstrom eines Prozessfluids durch die Elektrolysezellenanordnung verändert. Beispielsweise ist der Drosselquerschnitt mittels einer Verschiebung des Drosselkörpers relativ zu dem Fluiddurchlass veränderbar. Das Verschieben des Drosselkörpers relativ zu dem Träger verändert den Drosselquerschnitt, da mehr oder weniger des Fluiddurchlasses freigegeben ist.

Insbesondere ist der Drosselquerschnitt zwischen 100 % und 1 % des Maximaldrosselquerschnitts veränderbar. Insbesondere bei einem Elektrolysesystem mit einer Mehrzahl von Elektrolysezellenanordnungen wird der jeweilige Drosselquerschnitt, der je einer Elektrolysezellenanordnung zugeordnet ist, so eingestellt, dass die Elektrolysezellenanordnungen jeweils möglichst den Soll-Umsatz erfüllen.

Insbesondere wird ein Elektrolysezellensystem gemäß einer der hier beschriebenen Ausführungsformen mit einer Verschlussvorrichtung gemäß einer der hier beschriebenen Ausführungsformen mittels des hier beschriebenen Verfahrens betrieben. Vorteile und Merkmale gelten somit sowohl für die Verschlussvorrichtung, das Elektrolysesystem und das Verfahren, auch wenn der Vorteil und/oder das Merkmal nur für eines dieser Ausgestaltungen beschrieben ist.

Weitere Vorteile, Merkmale und Weiterbildungen ergeben sich aus den nachfolgenden, in Verbindung mit den Figuren erläuterten Beispielen. Gleiche, gleichartige und gleich wirkende Elemente können figurenübergreifend mit den gleichen Bezugszeichen versehen sein.

Es zeigen:
Figur 1 eine schematische Darstellung eines Teils eines Elektrolysesystems gemäß einem Ausführungsbeispiel,
Figur 2 eine schematische Darstellung einer Verschlussvorrichtung gemäß einem Ausführungsbeispiel, und
Figuren 3 und 4 jeweils schematische Darstellungen eines Elektrolysezellensystems gemäß Ausführungsbeispielen.

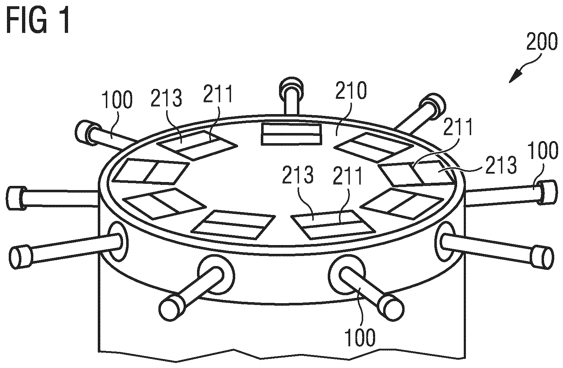

Figur 1 zeigt eine schematische Darstellung eines Elektrolysesystems 200. Das Elektrolysesystem 200 kann auch ein Brennstoffzellensystem sein. Insbesondere ist es möglich, mittels des Elektrolysesystems 200 bei hohen Temperaturen von bis zu 200 °C oder mehr, insbesondere bei Temperaturen von bis zu 850 °C oder mehr, und Wasserdampf sowie elektrischer Energie, Sauerstoff und Wasserstoff zu erzeugen. Alternativ oder zusätzlich ist es möglich aus Wasserstoff und Luft elektrische Energie zu erzeugen.

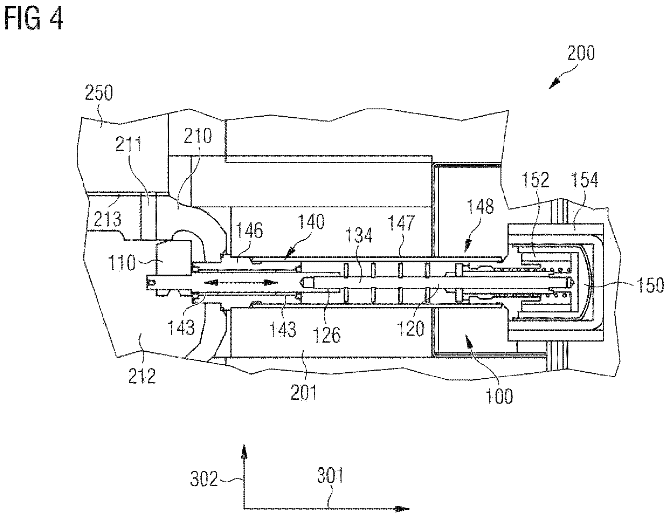

Das Elektrolysesystem 200 weist eine Vielzahl von Elektrolysezellenanordnungen 250 (Figur 4) auf. Die Elektrolysezellenanordnungen 250 sind auf einen Träger 210 angeordnet. Der Träger 210 weist eine Mehrzahl von Koppelstellen 213 auf. Je einer Koppelstelle 213 ist eine Elektrolysezellenanordnung 250 anordenbar. Je Koppelstelle 213 ist ein Fluiddurchlass 211 vorgesehen. Der Fluiddurchlass 211 ist beispielsweise als Langloch in dem Träger 210 ausgebildet. Im Betrieb ist auf der Koppelstelle 213 die Elektrolysezellenanordnung 250 angeordnet und ein Prozessfluid der Elektrolysezellenanordnung 200, beispielsweise Wasserdampf, insbesondere wasserstoffgashaltiger Dampf, kann nach der Elektrolyse aus der Elektrolysezellenanordnung 250 durch den Fluiddurchlass 211 hindurch in den Träger 210 gelangen.

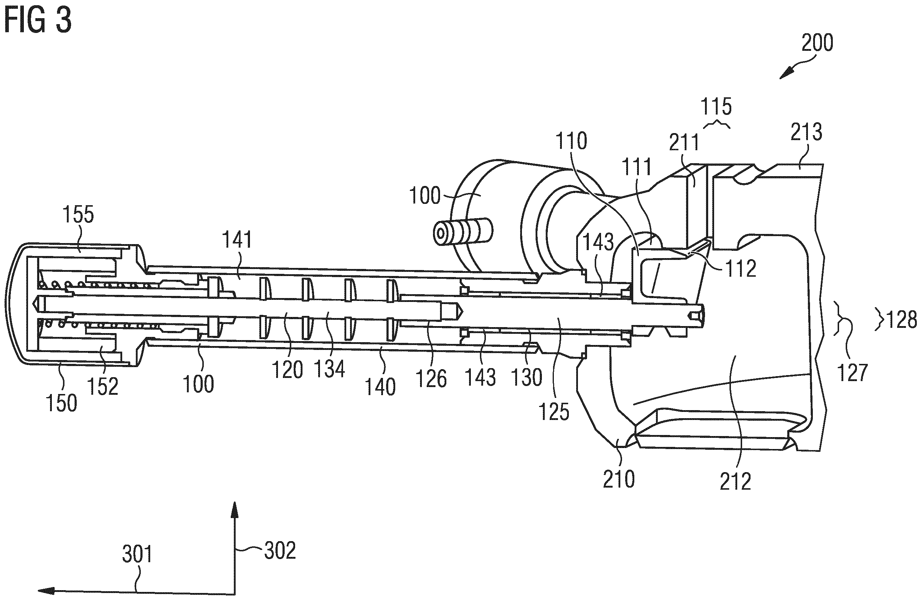

Der Träger 210 umgibt eine Sammelleitung 212 (Figuren 3 und 4). Der Fluiddurchlass 211 und die Sammelleitung 212 sind fluidisch miteinander gekoppelt, sodass das Prozessfluid aus der Elektrolysezellenanordnung 250 durch den Fluiddurchlass 211 hindurch in die Sammelleitung 212 gelangen kann. Insbesondere sind sämtliche Koppelstellen 213 und die jeweils zugehörigen Fluiddurchlässe 211 mit einer einzigen gemeinsamen Sammelleitung 212 verbunden.

Je Koppelstelle 213 ist eine Verschlussvorrichtung 100 vorgesehen. Die Verschlussvorrichtung 100 ist vorgesehen, um den jeweiligen zugehörigen Fluiddurchlass 211 freizugeben oder zumindest teilweise zu verschließen. Die Verschlussvorrichtungen 100 können individuell angesteuert werden, sodass die Fluiddurchlässe 211 jeweils unterschiedlich zueinander freigegeben und begrenzt werden können. Mittels der Verschlussvorrichtung 100 ist ein Volumenstrom durch den Fluiddurchlass 211 hindurch in die Sammelleitung 212 einstellbar. Insbesondere ist der freie Teil des Fluiddurchlasses 211 größer oder kleiner einstellbar, um mehr oder weniger Volumenstrom zu ermöglichen. Somit ist einstellbar, wie viel des Prozessfluids aus der Elektrolysezellenanordnung 250 in die Sammelleitung 212 gelangen kann.

Die Verschlussvorrichtung 100 je Elektrolysezellenanordnung 250 ermöglicht, den Volumenstrom des Prozessgases für jede Elektrolysezellenanordnung 250 individuell einzustellen. Dies ermöglicht für jede einzelne der Elektrolysezellenanordnungen 250 einen gewünschten, insbesondere hohen, Umsatz von Dampf zu Wasserstoff zu erreichen. Somit ist insbesondere der Umsatz des gesamten Elektrolysesystems 200 hoch.

Die Verschlussvorrichtung 100 je Elektrolysezellenanordnung 250 ermöglicht die Rücksichtnahme auf individuelle Eigenschaften der jeweiligen Elektrolysezellenanordnung 250. Beispielsweise ist der Fluiddurchlass 211 einer Elektrolysezellanordnung 250 mit vergleichsweise hohem Umsatz vergleichsweise weit geöffnet, um einen größeren Volumenstrom zu ermöglichen. Bei einer Elektrolysezellenanordnung 250, die zunächst einen geringeren Umsatz hat, wird der Fluiddurchlass 211 mittels der Verschlussvorrichtung 100 teilweise begrenzt, sodass weniger Volumenstrom ermöglicht wird. Somit wird der Umsatz der Elektrolysezellanordnung 250 mit zunächst geringem Umsatz erhöht. Der Umsatz der beiden Elektrolysezellenanordnungen 250 kann somit gleich eingestellt werden, wodurch der Umsatz des Elektrolysesystems 200 insgesamt gesteigert wird.

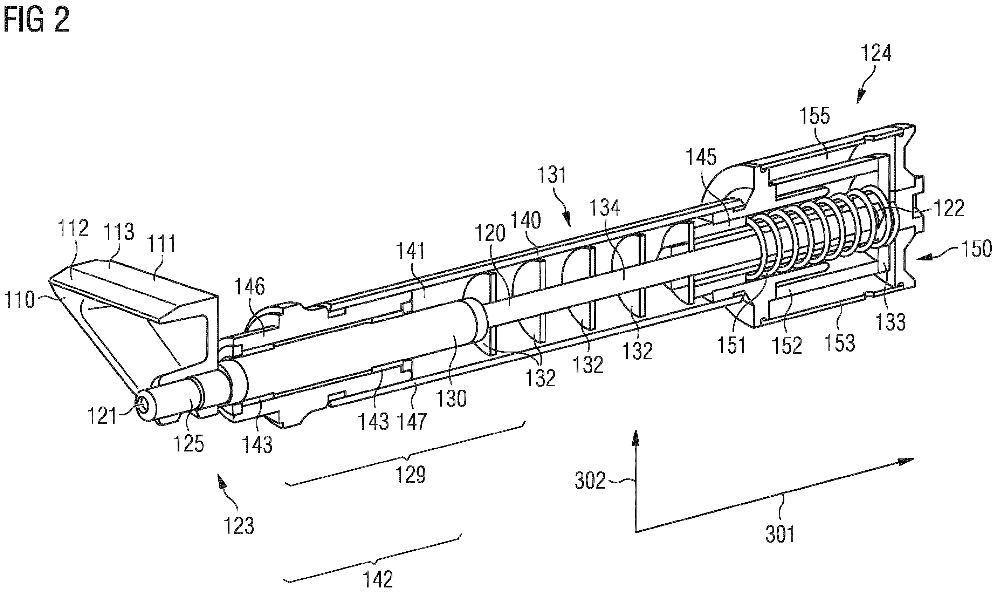

Figur 2 zeigt eine schematische Darstellung einer Verschlussvorrichtung 100 gemäß einem Ausführungsbeispiel. Die Verschlussvorrichtung 100 erstreckt sich länglich ausgedehnt entlang einer ersten Richtung 301. Ein Gehäuse 140 der Verschlussvorrichtung erstreckt sich entlang der ersten Richtung 301. Das Gehäuse 140 umgibt einen Innenraum 141. Das Gehäuse 140 ist insbesondere hohlzylinderförmig nach Art einer Hülse ausgebildet.

In dem Innenraum 141 ist eine Antriebsstange 120 angeordnet. Die Antriebsstange 120 erstreckt sich entlang der ersten Richtung 301 länglich ausgedehnt. Die Antriebsstange 120 erstreckt sich zwischen einem ersten Ende 121 und einem zweiten Ende 122 entlang der ersten Richtung 301. An das erste Ende 121 schließt ein erster Endabschnitt 123 an. Der erste Endabschnitt 123 erstreckt sich beginnend an dem ersten Ende 121 entlang der ersten Richtung 301 über einen Teil der Antriebsstange 120, insbesondere über maximal 50 % beispielsweise maximal 25 %, beispielsweise maximal 15 % der Gesamtlänge der Antriebsstange 120. Beispielsweise ist ein Teil der Antriebsstange 120, insbesondere ein Teil des ersten Endabschnitts 123 oder der gesamte Endabschnitt 123, außerhalb des Gehäuses 140 angeordnet. An das zweite Ende 122 schließt ein zweiter Endabschnitt 124 an. Der zweite Endabschnitt 124 erstreckt sich beginnend an dem zweiten Ende 122 entlang der ersten Richtung 301 über einen Teil der Antriebsstange 120, beispielsweise über maximal 50 %, beispielsweise maximal 25 %, beispielsweise über maximal 15 % der Gesamtlänge der Antriebsstange 120.

Die Verschlussvorrichtung 100 weist einen Drosselkörper 110 auf. Der Drosselkörper 110 ist an dem ersten Ende 121, insbesondere in dem ersten Endabschnitt 123, der Antriebsstange 120 angeordnet. Der Drosselkörper 110 ist mit der Antriebsstange 120 verbunden. Der Drosselkörper 110 ist außerhalb des Gehäuses 140 angeordnet.

Der Drosselkörper 110 weist eine Drosselfläche 111 auf. Die Drosselfläche 111 ist ausgebildet, den Fluiddurchlass 211 zumindest teilweise zu verschließen. Der Drosselkörper 110 ist mit der Drosselfläche 111 vor den Fluiddurchlass 211 schiebbar, um einen Drosselquerschnitt 115 (Figur 3) zu verändern. Wenn der Drosselkörper 110 den Fluiddurchlass 211 vollständig freigibt, entspricht der Drosselquerschnitt 115 beispielsweise der Gesamtbreite des Fluiddurchlasses 211 entlang der ersten Richtung 301. Indem der Drosselkörper 111 in den Bereich des Fluiddurchlasses 211 geschoben wird, wird der Drosselquerschnitt 115 verringert und ist insbesondere kleiner als der Fluiddurchlass 211 entlang der ersten Richtung 301.

Die Drosselfläche 111 weist beispielsweise eine schräge Flanke 112 auf. Auf die schräge Flanke 112 ist gemäß weiterer, nicht explizit dargestellter Ausführungsbeispiele, verzichtbar. Die schräge Flanke 112 ist insbesondere an einem dem Gehäuse 140 abgewandten Ende der Drosselfläche 111 angeordnet. An die schräge Flanke 112 schließt sich in Richtung hin zu dem Gehäuse 140 ein gerader Bereich 113 an. Mittels der Dimensionierung und der Ausrichtung der schrägen Flanke 112 und des geraden Bereichs 113 ist eine vorgegebene Ventilkennlinie präzise realisierbar. Dies ermöglicht beispielsweise eine hohe Regelgenauigkeit des Volumenstroms.

Der Drosselkörper 110 ist auf einem Exzenter 125 der Antriebsstange 120 angeordnet. Der Exzenter 125 ist insbesondere exzentrisch zu der übrigen Antriebsstange 120 in dem ersten Endabschnitt 123 angeordnet. Der Exzenter 125 ist insbesondere entlang einer zweiten Richtung 302 versetzt angeordnet zu einer Längsachse der übrigen Antriebsstange 120. Die erste Richtung 301 und die zweite Richtung 302 stehen senkrecht aufeinander.

Der Exzenter 125 weist beispielsweise ein Innengewinde 126 auf (Figur 4). Mittels des Innengewindes 126 ist der Exzenter 125 auf die übrige Antriebsstange 120 aufgeschraubt. Die übrige Antriebsstange 120 ist beispielsweise als Gewindestange 134 (Figuren 3 und 4) ausgebildet.

Der Exzenter 125 weist in einem Lagerabschnitt 129 eine Keramikbeschichtung 130 auf. Auf die Keramikbeschichtung 130 kann in weiteren, nicht explizit dargestellten Ausführungsbeispielen verzichtet werden. Die Keramikbeschichtung 130 erstreckt sich im ersten Endabschnitt 123 entlang der ersten Richtung 301 um die Antriebsstange 120. Die Keramikbeschichtung 130 ermöglicht einen verlässlichen Betrieb auch bei hohen Temperaturen während des Betriebs der Verschlussvorrichtung 100 und des Elektrolysesystems 200.

Mittels einer Rotation um die erste Richtung 301 des Exzenters 125 relativ zu der Gewindestange 134 lässt sich die Nullposition des Drosselkörpers 110 entlang der ersten Richtung 301 und entlang der zweiten Richtung 302 insbesondere relativ zu dem Gehäuse 140 einstellen.

Die Antriebsstange 120 ist in dem zweiten Endabschnitt 124 mit einem Antrieb 150 verbunden. Der Antrieb 150 ist ausgebildet, die Antriebsstange 120 entlang der ersten Richtung 301 relativ zu dem Gehäuse 140 linear zu verschieben. Somit ist der Drosselkörper 110 mittels des Antriebs 150 entlang der ersten Richtung 301 relativ zu dem Gehäuse 140 linear verschiebbar.

Der Antrieb 150 ist beispielsweise ein pneumatischer Antrieb. Der Antrieb 150 ist beispielsweise ein hydraulischer Antrieb. Auch andere Arten und Ausgestaltungen des Antriebs 150 sind möglich.

Im dargestellten Ausführungsbeispiel weist der Antrieb 150 eine Feder 151 auf. Die Feder 151 ist zwischen einem Federsitz 145 des Gehäuses 140 und einer Bodenplatte 133 der Antriebsstange 120 eingespannt. Die Bodenplatte 133 ist insbesondere am zweiten Ende 122 der Antriebsstange 120 angeordnet. Die Feder 151 ist so vorgespannt, dass sie die Bodenplatte 133 entlang der ersten Richtung 301 von dem Federsitz 145 wegdrückt. In einem Ruhezustand ist der Drosselkörper 110 somit in einer Position am nächsten an dem Gehäuse 140 angeordnet. Mittels einer Aktivierung des Antriebs 150 ist der Drosselkörper 110 entgegen der Federkraft der Feder 151 entlang der ersten Richtung 301 von dem Gehäuse 140 wegbewegbar.

Der Antrieb 150 weist einen Druckbehälter 153 auf, in dem eine hohe zylinderförmige Membran 152 angeordnet ist. Die Membran 152 ist mit der Bodenplatte 133 und mit dem Gehäuse 140 fluiddicht verbunden. Die Membran 152 schließt einen gegenüber dem Innenraum 141 hermetisch abgedichteten Membranaußenraum 155 ein. Mittels Erhöhung des Drucks in dem Druckbehälter 153 in dem Membranaußenraum 155 mit dem Pneumatikarbeitsmedium oder dem Hydraulikarbeitsmedium wird die Membran 152 komprimiert. Somit wird die Antriebsstange 120 gegen die Federkraft der Feder 151 entlang der ersten Richtung 301 bewegt, um den Drosselkörper 110 in die Richtung weg von dem Gehäuse 140 zu bewegen. Mittels inkrementellen Erhöhens oder Verringern des Drucks in dem Druckbehälter 153 ist es möglich, die Position des Drosselkörpers 110 in kleinen Schritten oder kontinuierlich anzupassen. Beispielsweise wird Luft oder ein Formiergas in den Druckbehälter 153 als Pneumatikarbeitsmedium eingebracht.

Es ist auch möglich, den Antrieb 150 als gedämpften hydropneumatischen Antrieb auszubilden. Dies ist insbesondere nutzbringend für eine erhöhte Stell- und Regelgenauigkeit und eine Vermeidung oder Verringerung eines Stick-Slip-Effekts.

Zwischen der Keramikbeschichtung 130 und dem Antrieb 150 ist ein Wärmeschild 131 an der Antriebsstange 120 angeordnet. Der Wärmeschild 131 weist beispielsweise eine Vielzahl von Lamellen 132 auf, die sich radial von der Antriebsstange 120 wegerstrecken. Die Lamellen verringern eine Wärmeausbreitung in dem Innenraum 141 entlang der ersten Richtung 301 aus Richtung des Drosselkörpers 110 hin zu dem Antrieb 150.

Das Gehäuse 140 weist in einem dem Drosselkörper 110 zugewandten Gehäuseabschnitt 142 ein Keramiklager 143 auf. Auf das Keramiklager 143 kann in weiteren, nicht explizit dargestellten Ausführungsbeispielen verzichtet werden.

Das Keramiklager weist beispielsweise zwei ringförmige Keramikelemente an einer Innenwand des Gehäuses 140 auf. Es können auch mehr oder weniger ringförmige Keramikelemente vorgesehen sein.

Beispielsweise weist das Gehäuse 140 ein Lagergehäuse 146 in dem Gehäuseabschnitt 142 auf, in dem das Keramiklager 143 angeordnet ist. Das Lagergehäuse 146 ist beispielsweise mit einer Hülse 174 des Gehäuses 140 fluiddicht verbunden.

Das Keramiklager 143 ist in Kontakt mit der Antriebsstange 120, um die lineare Verschiebbarkeit der Antriebsstange 120 relativ zu dem Gehäuse 140 zu ermöglichen. Das Keramiklager 143 ist insbesondere in Kontakt mit dem Lagerabschnitt 129 der Antriebsstange 120. Die Antriebsstange 120 ist mittels der Keramiklager 143 an dem Gehäuse 140 verschiebbar abgestützt. Beispielsweise ist die Keramikbeschichtung 130 der Antriebsstange 120 in direktem Kontakt mit dem Keramiklager 143. Dies ermöglicht auch bei den hohen Temperaturen während des Betriebs eine verlässliche Funktionalität der Verschlussvorrichtung 100.

Der Exzenter 125 ist beispielsweise aus einem Gussmaterial hergestellt, das insbesondere auch bei den im Betrieb auftretenden hohen Temperaturen eine ausreichende Kriechfestigkeit aufweist.

Der Exzenter 125 hat im Bereich der Keramikbeschichtung 130 einen ersten Durchmesser 127. Die Gewindestange 134 hat einen zweiten Durchmesser 128 (Figur 3). Der zweite Durchmesser 128 ist kleiner als der erste Durchmesser 127. Somit ist es möglich, Wärmeverluste an die Umgebung zu verringern.

Die Gewindestange 134 ist beispielsweise aus einem anderen Material gebildet als der Exzenter 125. Insbesondere ist es möglich, einen günstigeren Werkstoff zu verwenden, beispielsweise da im Bereich der Gewindestange 134 geringere Temperaturen auftreten als im Bereich des Exzenters 125. Die Lamellen 132 sind insbesondere an der Gewindestange 134 aufgebracht. Die Lamellen 132 sind beispielsweise aus Blechscheiben gebildet.

Figur 3 zeigt die Verschlussvorrichtung 100 im betriebsfertigen Zustand gekoppelt an dem Träger 210. Das Gehäuse 140 ist fluiddicht mit dem Träger 210 verbunden. Das Gehäuse erstreckt sich von außen durch den Träger 210 hindurch zu der Sammelleitung 212. Der Drosselkörper 110 ist in der Sammelleitung 212 angeordnet. Der Antrieb 150 ist außerhalb der Sammelleitung 212 und außerhalb des Trägers 210 angeordnet. Der Drosselkörper 110 ist mit der Drosselfläche 111 an dem Fluiddurchlass 211 angeordnet. Die schräge Flanke 112 ist dem Fluiddurchlass 211 zugewandt angeordnet.

Der Drosselkörper 110 ist angetrieben von dem Antrieb 150 mittels der Antriebsstange 120 vor den Fluiddurchlass 211 schiebbar oder von dem Fluiddurchlass 211 wegschiebbar, um die Größe des Drosselquerschnitts 115 wie gewünscht zu verändern. Somit ist ein Volumenstrom durch den Fluiddurchlass 211 einstellbar. Insbesondere ist ein maximaler Volumenstrom durch den Fluiddurchlass 211 einstellbar. Aufgrund der hohen Temperaturen, die im Betrieb in dem Fluiddurchlass 211 und in der Sammelleitung 212 herrschen, wird die Verschlussvorrichtung 100 gemäß der vorliegenden Offenbarung verwendet, um den Drosselquerschnitt 115 einstellen zu können.

Die Drosselung erfolgt in Strömungsrichtung nach der Elektrolysezellenanordnung 250, um zu vermeiden, dass die Anströmung der unteren Ebenen, also der dem Träger 210 zugewandten Ebenen, im Einströmbereich der Elektrolysezellenanordnung 250 negativ beeinflusst wird. Der Drosselkörper 110 ist von dem Fluiddurchlass 211 wegbewegbar, um den Fluiddurchlass 211 hundertprozentig freizugeben. Der Drosselkörper 110 ist vor den Fluiddurchlass 211 schiebbar, sodass beispielsweise nur noch 1 % des Fluiddurchlasses 211 für den Volumenstrom durchgängig ist. Alle Stufen dazwischen sind stufenweise oder kontinuierlich ansteuerbar mittels einer entsprechenden Positionierung des Drosselkörpers 111 entlang der ersten Richtung 301. Die Drosselfläche 111 ist insbesondere in jeder Position von dem Träger 210 beabstandet.

Figur 4 zeigt das Elektrolysesystem 200 mit der Elektrolysezellenanordnung 250 in einem betriebsfertigen Zustand. Die Elektrolysezellenanordnung 250 ist auf der Koppelstelle 213 des Trägers 210 angeordnet. Prozessfluid wird in die Elektrolysezellenanordnung 250 eingebracht, um Wasserstoff und Sauerstoff zu erhalten. Wasserstoff wird aus der Elektrolysezellenanordnung 250 durch den Fluiddurchlass 211 in die Sammelleitung 212 geleitet.

Außerhalb des Trägers 210 ist eine Dämmung 201 angeordnet, die sowohl den Träger 210 dämmt als auch das Gehäuse 140 der Verschlussvorrichtung 100 zumindest teilweise umgibt. Das Gehäuse 140 weist einen dem Träger 210 abgewandten freiliegenden Abschnitt 148 auf, der nicht von der Dämmung 201 umgeben ist. An den freiliegenden Abschnitt 148 grenzt der Antrieb 150 an. Beispielsweise ist eine Dämmung 154 vorgesehen, die den Antrieb 150 umgibt und zusätzlich thermisch isoliert. Mittels der Verschiebung des Drosselkörpers 110 relativ zu dem Träger 210 und insbesondere relativ zu dem Fluiddurchlass 211 ist der Volumenstrom aus der Elektrolysezellenanordnung 250 in die Sammelleitung 212 einstellbar. Somit ist insbesondere auch der Volumenstrom durch die Elektrolysezellenanordnung 250 einstellbar.

Im Innenraum 141 des Gehäuses 140 ist im Betrieb Prozessfluid, da der Innenraum 141 fluidisch mit der Sammelleitung 212 gekoppelt ist. Im Betrieb wird eine Temperatur der Membran 152 gemäß Ausführungsbeispielen bei über 100 °C gehalten. Somit ist vermeidbar, dass im Prozessfluid verbliebener Wasserdampf kondensiert. Hierzu ist beispielsweise die Dämmung 154 nutzbringend. Die Dämmung 154 ist auch nutzbringend, dass die Temperatur der Membran 152 nicht zu hoch wird, um eine mechanische Festigkeit und Druckbeständigkeit wie gewünscht zu erhalten. Beispielsweise ist die Dämmung 154 an dem Antrieb 150 angeordnet und der freiliegende Abschnitt 148 weist keine Dämmung 154 auf und ist außerhalb der Dämmung 201 des Trägers 210 angeordnet. Somit ist im freiliegenden Abschnitt 148 eine Kühlung des Gehäuses 140 möglich.

Das Verändern des Drosselquerschnitts 115 mittels der Verschlussvorrichtung 100 ermöglicht einen Betrieb der Elektrolysezellenanordnung 250, sodass ein Ist-Umsatz einem vorgegebenen Soll-Umsatz entspricht. Falls der Ist-Umsatz von dem vorgegebenen Soll-Umsatz abweicht, ist es möglich, mittels der Verschiebung des Drosselkörpers 110 den Ist-Umsatz zu verändern mittels der Veränderung des Volumenstroms, um den Ist-Umsatz an den Soll-Umsatz anzunähern. Somit ermöglicht die Verschlussvorrichtung 100 einen verlässlichen Betrieb des Elektrolysesystems 200.

### Bezugszeichen

100 Verschlussvorrichtung
110 Drosselkörper
111 Drosselfläche
112 schräge Flanke
113 gerade Bereich
115 Drosselquerschnitt
120 Antriebsstange
121 erstes Ende
122 zweites Ende
123 erster Endabschnitt
124 zweiter Endabschnitt
125 Exzenter
126 Innengewinde
127 erster Durchmesser
128 zweiter Durchmesser
129 Lagerabschnitt
130 Keramikbeschichtung
131 Wärmeschild
132 Lamelle
133 Bodenplatte
134 Gewindestange
140 Gehäuse
141 Innenraum
142 Gehäuseendabschnitt
143 Keramiklager
145 Federsitz
146 Lagergehäuse
147 Hülse
148 freiliegender Abschnitt
150 Antrieb
151 Feder
152 Membran
153 Druckbehälter
154 Dämmung
155 Membranaußenraum
200 Elektrolysesystem
201 Dämmung
210 Träger
211 Fluiddurchlass
212 Sammelleitung
213 Koppelstelle
250 Elektrolysezellenanordnung
301 erste Richtung
302 zweite Richtung

## Patentansprüche

1. Verschlussvorrichtung (100) für ein Elektrolysesystem (200), wobei die Verschlussvorrichtung (100) aufweist:
- einen Drosselkörper (110), der eine Drosselfläche (111) aufweist, die dazu ausgebildet ist, einen Fluiddurchlass (211) zu begrenzen,
- eine entlang einer ersten Richtung (301) länglich ausgedehnte Antriebsstange (120),
- ein entlang der ersten Richtung (301) länglich ausgedehntes Gehäuse (140), das einen Innenraum (141) umgibt, wobei die Antriebsstange (120) zumindest teilweise in dem Innenraum (141) angeordnet ist,
- einen Antrieb (150), wobei die Antriebsstange (120) mit dem Drosselkörper (110) und dem Antrieb (150) gekoppelt ist, um eine Antriebsenergie des Antriebs (150) auf den Drosselkörper (110) zu übertragen, sodass der Drosselkörper (110) entlang der ersten Richtung (301) relativ zu dem Gehäuse (140) linear verschiebbar ist.

2. Verschlussvorrichtung nach dem vorhergehenden Anspruch, bei der die Drosselfläche (111) eine schräge Flanke (112) aufweist.

3. Verschlussvorrichtung nach einem der vorhergehenden Ansprüche, bei der der Drosselkörper (110) relativ zu dem Gehäuse (140) entlang einer zweiten Richtung (302) verschiebbar ist, wobei die zweite Richtung (302) quer zu der ersten Richtung (301) ausgerichtet ist.

4. Verschlussvorrichtung nach dem vorhergehenden Anspruch, bei der die Antriebsstange (120) einen exzentrischen ersten Endabschnitt (123) aufweist, wobei der Drosselkörper (110) an dem ersten Endabschnitt (123) mit der Antriebsstange (120) gekoppelt ist, um mittels einer Drehung des ersten Endabschnitts (123) um die erste Richtung (301) den Drosselkörper (110) entlang der ersten Richtung (301) und/oder entlang der zweiten Richtung (302) zu verschieben.

5. Verschlussvorrichtung nach einem der vorhergehenden Ansprüche, bei der das Gehäuse (140) in einem dem Drosselkörper (110) zugewandten Gehäuseendabschnitt (142) ein Keramiklager (143) aufweist, an dem die Antriebsstange (120) abgestützt ist.

6. Verschlussvorrichtung nach einem der vorhergehenden Ansprüche, bei der die Antriebsstange (120) in einem dem Antrieb (150) abgewandten Lagerabschnitt (129) eine Keramikbeschichtung (130) aufweist.

7. Verschlussvorrichtung nach einem der vorhergehenden Ansprüche, bei der die Antriebsstange (120) einen Wärmeschild (132) aufweist, um eine Ausbreitung von Wärme entlang der ersten Richtung (301) in dem Innenraum (141) zu verringern.

8. Verschlussvorrichtung nach einem der vorhergehenden Ansprüche, bei der der Antrieb (150) einen pneumatischen oder hydraulischen Antrieb aufweist, der an einem dem Drosselkörper (110) abgewandten zweiten Endabschnitt (124) der Antriebsstange (120) mit der Antriebsstange (120) gekoppelt ist.

9. Verschlussvorrichtung nach einem der vorhergehenden Ansprüche, bei der der Antrieb (150) eine Feder (151) aufweist, die die Antriebsstange (120) entlang der ersten Richtung (301) vorspannt.

10. Elektrolysesystem (200), aufweisend:
- einen Träger (210) zum Tragen einer Elektrolysezellenanordnung (250),
- eine Verschlussvorrichtung (100) nach einem der vorhergehenden Ansprüche, die mit dem Träger (210) gekoppelt ist, wobei der Träger (210) eine Sammelleitung (212) umgibt und wobei der Träger (210) den Fluiddurchlass (211) aufweist, wobei der Fluiddurchlass (211) fluidisch mit der Sammelleitung (212) gekoppelt ist, wobei der Drosselkörper (210) innerhalb der Sammelleitung (212) angeordnet ist und relativ zu dem Träger (210) verschiebbar ist, um den Fluiddurchlass (211) wahlweise freizugeben oder zumindest teilweise vor dem Fluiddurchlass (211) angeordnet zu sein, um den Fluiddurchlass zu begrenzen.

11. Elektrolysesystem nach Anspruch 10, bei dem das Gehäuse (140) und der Träger (210) fluiddicht miteinander gekoppelt sind und das Gehäuse (140) von außerhalb des Trägers (210) in den Innenraum (141) hineinragt.

12. Elektrolysesystem nach Anspruch 10 oder 11, bei dem der Antrieb (150) außerhalb des Trägers (210) angeordnet ist.

13. Elektrolysesystem nach einem der Ansprüche 10 bis 12, aufweisend eine Elektrolysezellenanordnung (250), die auf dem Träger (210) angeordnet ist und fluidisch mit dem Fluiddurchlass (211) gekoppelt ist zum Leiten eines Prozessfluids aus der Elektrolysezellenanordnung (250) durch den Fluiddurchlass (211) hindurch in die Sammelleitung (212).

14. Elektrolysesystem nach einem der Ansprüche 10 bis 13, aufweisend eine Mehrzahl von Verschlussvorrichtungen (100) nach einem der Ansprüche 1 bis 9, die jeweils mit dem Träger (210) gekoppelt sind, wobei die Drosselkörper (110) der Verschlussvorrichtungen (100) jeweils innerhalb der Sammelleitung (212) angeordnet sind.

15. Verfahren zum Betreiben eines Elektrolysesystems (200) mit einer Elektrolysezellenanordnung (250), aufweisend:
- Vorgeben eines Soll-Umsatzes der Elektrolyse in der Elektrolysezellenanordnung (250),
- Verändern eines Drosselquerschnitts (115) in Abhängigkeit von dem Soll-Umsatz, und dadurch
- Verändern eines Volumenstroms eines Prozessfluides durch die Elektrolysezellenanordnung (250).
